# DEMANDE DE BREVET EUROPEEN

(11) **EP 2 428 879 A1**
(43) Date de publication de la demande: **14.03.2012**
(21) Numéro de dépôt: 11180850.7
(22) Date de dépôt: 12.09.2011
(51) Int. Cl.: G06F 3/041, G06F 3/01, H04R 1/28, G06F 3/033

(54) **Dispositif d'interaction haptique et procédé de génération d'effets haptiques et sonores**

(30) Priorité: 14.09.2010 FR 1003655
(71) Demandeur: Thales, 92200 Neuilly Sur Seine (FR)
(72) Inventeur: CONI, Philippe, 33127 SAINT JEAN D'ILLAC (FR); AUGEREAU, Philippe, 33610 CESTAS (FR)
(74) Mandataire: Bréda, Jean-Marc

(57) **Abrégé**

L'invention concerne un dispositif d'interaction (10) comprenant une surface tactile (1) et un châssis (4) et permettant de générer des effets d'interaction haptiques, sonores (100, 101) et visuels. Les effets sonores et haptiques sont générés par des moyens de structure (1, 2, 31, 32, 4) et électroniques communs agencés pour que la surface tactile (1) et le châssis (4) se comporte comme un haut-parleur.

L'invention concerne également un procédé de génération d'effets d'interaction.

L'invention est un dispositif de visualisation (10) et s'applique aux ordinateurs, téléviseurs, téléphones et tablettes tactiles par exemple. Elle s'applique préférentiellement aux dispositifs de visualisation ayant un écran de grande diagonale.

## Description

Le domaine de l'invention est celui des écrans tactiles connus également sous le nom de « touchscreens » en anglais. Ces écrans sont des surfaces sensibles activées par le doigt ou la main d'un utilisateur ou tout autre moyen d'activation et permettent le plus souvent de commander un équipement ou un système au travers d'une interface graphique. Il existe un grand nombre d'utilisations possibles. On citera en particulier les applications aéronautiques où un pilote peut ainsi contrôler et commander l'ensemble des fonctions affichées par le système avionique de l'aéronef.

De telles interfaces doivent présenter à l'utilisateur un retour d'information, par exemple le changement d'état d'un bouton, de sorte que l'opérateur puisse visualiser le passage de non-activé à activé, et confirmer ainsi son interaction.

Ce mode de visualisation n'est pas très collaboratif et des erreurs peuvent intervenir, liées au doute sur l'activation ou non de la commande, et ne s'applique pas dans le cas de commandes en aveugle, le pilote devant avant tout assurer sa tâche principale en regardant vers l'extérieur.

Pour ce faire, on fait appel à des systèmes haptiques à retour de force qui permettent d'augmenter la réalité de l'interaction, en donnant un retour sur l'état de l'objet activé. Suivant l'état de l'art généralement constaté, ce retour est essentiellement vibratoire ou inertiel, ne générant pas ou peu de son, et de façon assez désagréable. Un système audio peut être ajouté, mais il sera assez difficile à loger et à piloter. En effet, les dispositifs haptiques pour une utilisation aéronautique sont limités par les contraintes de l'environnement. De plus, les dispositifs de type tablette tactile présentant généralement une épaisseur de quelques centimètres compliquent les possibilités d'insertion d'un système audio adapté à l'environnement sonore bruyant d'un cockpit d'aéronef.

En réponse au problème de logement d'un système audio complémentaire au dispositif haptique, on connaît de l'état de la technique la demande de brevet américain US2008/0055277 et la demande internationale W02010065207. Ces documents décrivent des dispositifs haptiques comportant une surface tactile montée sur une suspension souple qui assure un déplacement de la surface avec une certaine raideur. Le dispositif comprend en outre un actuateur placé au centre ou en périphérie mettant l'ensemble en mouvement pour produire un effet haptique ou un son. La dalle tactile et l'actuateur permettent ainsi de former un ensemble acoustique par les vibrations de la dalle tactile.

En outre, ces dispositifs haptiques utilisent un contrôleur haptique à micro-processeur, associé à une bibliothèque d'effets, comme décrit dans les brevets cités précédemment, et ce contrôleur est mis en oeuvre avec un contrôleur ou pilote (« driver » en anglais) logiciel dédié. De plus, les applications utilisant l'effet haptique devront avoir été conçues pour être compatibles de ce contrôleur

Pour résumer les inconvénients des dispositifs haptiques existants, tous les systèmes haptiques connus ne sont pas très fidèles à la reproduction des effets haptiques, et particulièrement sur des grands écrans (diagonale de plus de 10 pouces par exemples), produisant des efforts inertiels importants de nature à mettre en résonance les objets voisins (Planche de bord, bureau, supports, ...).

De plus, les dispositifs haptiques émettent des sons provenant de la résonance de leurs divers constituants, générant de façon involontaire un bruit désagréable.

De plus, une électronique de génération d'effets haptique est à rajouter à l'écran tactile, avec des contrôleurs logiciels et des applications dédiées.

Un premier objectif de l'invention est de proposer un dispositif d'interaction comportant des fonctions haptiques et des fonctions sonores afin d'améliorer l'interactivité du dit dispositif.

Un second objectif de l'invention est de proposer un dispositif haptique audio adapté à un environnement à fortes contraintes, comme par exemple un cockpit d'aéronef. Pour cela, le dispositif haptique doit être suffisamment compact et fiable pour être manipulé par un pilote d'aéronef lors des tâches de pilotage.

Plus précisément, l'invention concerne un dispositif d'interaction comprenant un ensemble structural et un ensemble de commande d'au moins un effet d'interaction, l'ensemble structural comportant un châssis formant une cavité, une pièce plane formée par une surface tactile et au moins un actuateur, et l'ensemble de commande comprenant un moyen de génération d'un signal de commande tactile en réponse à l'actionnement de la dite surface tactile et un moyen de pilotage de l'actuateur pour déplacer la pièce plane par rapport à la cavité du châssis. L'ensemble structural est agencé pour que la pièce plane soit maintenue en suspension par l'actuateur de sorte à couvrir la cavité, l'ensemble de commande comporte également un moyen de calcul, commandé par le signal de commande tactile, apte à générer un premier signal audio, comportant une composante fréquentielle représentant un effet d'interaction sonore, pour commander le moyen de pilotage de l'actuateur, et l'ensemble de structure et l'ensemble de commande sont agencés de sorte que l'actionnement de la surface tactile commande le déplacement de la pièce plane par rapport à la cavité du châssis pour générer l'effet d'interaction sonore.

Avantageusement, le moyen de calcul est apte à générer un second signal audio, comportant une première composante fréquentielle représentant un effet d'interaction haptique et une seconde composante fréquentielle représentant un effet d'interaction sonore, de sorte que l'actionnement de la surface tactile commande le déplacement de la pièce plane par rapport à la cavité du châssis pour générer le dit effet sonore et le dit effet haptique simultanément.

Selon une variante, il comporte également un deuxième actuateur associé à un moyen de pilotage, le moyen de calcul étant apte à générer un troisième signal audio comportant une composante fréquentielle représentant un effet d'interaction sonore pour commander le moyen de pilotage du deuxième actuateur.

Avantageusement, le moyen de calcul est apte à générer un quatrième signal audio comportant une première composante fréquentielle représentant un effet d'interaction haptique et une seconde composante fréquentielle représentant un effet d'interaction sonore de sorte que l'actionnement de la surface tactile commande le déplacement de la pièce plane au moyen du deuxième actuateur par rapport à la cavité du châssis pour générer le dit effet sonore et le dit effet haptique simultanément.

Selon une variante, la pièce plane comporte également un cadre fixé sur la périphérie de la dite surface tactile, le cadre ayant une forme définie pour former un évent entre la périphérie du châssis et la périphérie de la pièce plane, la section de l'évent étant dimensionnée pour que, lors du déplacement de la pièce plane par rapport à la cavité, l'onde arrière, à la fréquence de résonnance, soit inversée en phase et s'ajoute à l'onde avant.

Selon une variante, la bordure extérieure du cadre est courbée perpendiculairement à la bordure intérieure du cadre fixée à la surface tactile de sorte à couvrir la périphérie du châssis, l'espace entre la périphérie du châssis et la bordure extérieure formant l'évent.

De préférence, les actuateurs sont configurés pour déplacer la pièce plane perpendiculairement au plan de la surface tactile.

L'invention concerne également le procédé de génération d'au moins un effet d'interaction pour un dispositif interactif selon la revendication 1. Il comporte les étapes successives suivantes :
Une première étape de génération d'un signal de commande tactile en réponse à l'actionnement de la dite surface tactile,
Une seconde étape de génération d'un signal audio comportant une composante fréquentielle représentant un effet d'interaction sonore,
Une troisième étape de commande des actuateurs selon le signal audio de sorte que l'actionnement de la surface tactile commande le déplacement de la pièce plane par rapport à la cavité du châssis pour générer l'effet d'interaction sonore.

Selon une variante, à la seconde étape, on combine au signal audio un signal comportant une composante fréquentielle représentant un effet d'interaction haptique et en ce qu'à la troisième étape, on commande les actuateurs selon le signal audio de sorte que l'actionnement de la surface tactile commande le déplacement de la pièce plane par rapport à la cavité du châssis pour générer le dit effet sonore et le dit effet haptique simultanément.

De préférence, le dispositif d'interaction comporte également un moyen d'affichage, et le procédé comporte une étape de génération d'un effet d'interaction visuel sur le moyen d'affichage.

Un premier avantage de l'invention est de comporter des fonctionnalités d'effets d'interaction sonores sans ajouter des moyens spécifiques à la génération du son. En effet, la structure même du dispositif d'interaction se comporte comme un haut-parleur, le déplacement de la surface tactile au dessus de la cavité formée par le châssis du dispositif d'interaction permettant de générer une onde sonore. De préférence, le châssis et la surface tactile présentent une diagonale d'au moins 10 pouces et le montage du cadre autour de la surface tactile est configuré de sorte à présenter une raideur favorable à la génération d'ondes sonores.

Un second avantage du fait de la création d'un signal audio en réponse à l'ordre de commande tactile et du pilotage des actuateurs directement par ce même signal audio est de ne pas avoir à intégrer une électronique de contrôle d'effets haptiques. Contrairement aux systèmes connus, l'effet haptique n'est pas transmis par une liaison de contrôle, un tel système est décrit dans le brevet US2008/0055277 à titre d'exemple. Selon l'invention, ce dispositif complexe de contrôle n'est plus utile, ainsi, il n'est plus besoin de connections spécifiques vers le dispositif haptique, ni de contrôleurs logiciels pour le mettre en oeuvre.

Selon l'invention, la surface tactile est utilisée comme membrane et les actuateurs sont montés sur un cadre rigide supportant ladite surface et sont utilisés en temps que transducteur audio et haptique. Un tel dispositif ne nécessite donc pas de suspension, puisque cette fonction est assurée par les actuateurs eux même, qui disposent d'une raideur compatible avec la reproduction des ondes sonores, avec une bande passante allant de 0Hz (Quasi-statique) à plus de 20 Khz.

L'invention sera mieux comprise et d'autres avantages apparaîtront à la lecture de la description qui va suivre donnée à titre non limitatif et grâce aux figures annexées parmi lesquelles :
La figure 1 représente un schéma de l'ensemble structural du dispositif d'interaction selon l'invention.
La figure 2 représente un graphique décrivant les composantes du signal audio pilotant les actuateurs.
La figure 3 représente un schéma de l'ensemble de commande des effets d'interaction du dispositif d'interaction selon l'invention.

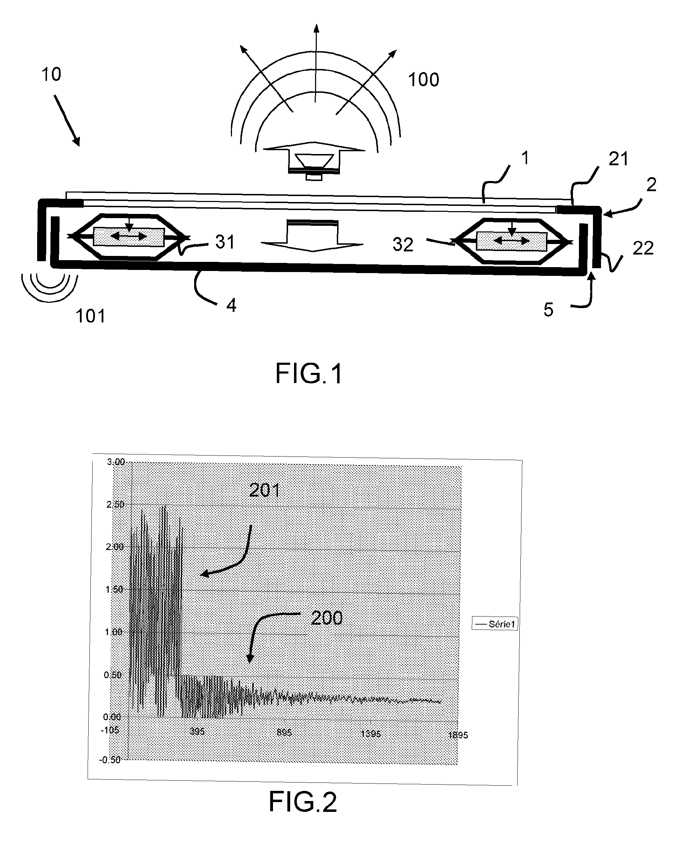

L'invention concerne un dispositif d'interaction 10 comprenant un écran de visualisation pour afficher l'interface visuelle devant être manipulée par l'opérateur. Selon la figure 1, le dispositif d'interaction comporte un premier ensemble composant la structure et comprenant un châssis 4, un ou, préférentiellement, plusieurs actuateurs 31 et 32 et une pièce plane comprenant la surface tactile 1.

Le châssis 4 est destiné à accueillir les moyens électroniques permettant de réaliser les fonctions d'interaction du dispositif d'interaction. Ces moyens comprennent l'électronique d'affichage de l'écran de visualisation (non représenté sur la figure 1), l'électronique de mesure du toucher en position et en effort de la surface tactile 1 et l'électronique de commande des actuateurs 31 et 32. Le châssis 4 est un réceptacle de la forme d'une cavité à l'intérieur de laquelle est intégré l'ensemble de ces moyens électroniques. Le châssis 4 est de préférence composé d'un matériau rigide plastique ou métallique par exemple. L'homme du métier sait adapter le matériau adéquat pour former un réceptacle rigide destiné à protéger et fixer les moyens électroniques. Pour une application aéronautique, le châssis 4 peut être fixe dans le cockpit d'aéronef ou être amovible pour une utilisation de type tablette tactile. Dans le reste de la description, on considère le châssis 4 comme étant le référentiel par rapport aux autres composants du dispositif d'interaction et est donc considéré immobile dans l'espace.

Le type d'écran utilisé dans le dispositif de visualisation 10 n'est pas une caractéristique limitative de l'invention. De préférence, une technologie à écran plat est utilisée afin de proposer un dispositif de visualisation de faible profondeur. On peut citer par exemple les écrans LCD, les écrans plasma, les dispositifs à éclairage à LED (« light-emitting diode ») ou éclairage OLED (« Organic Light-Emitting Diode ») ou tout autre dispositif pour l'affichage d'images. L'écran peut être fixé directement sur une face de la surface tactile ou être monté à l'intérieur du dispositif de visualisation entre la surface tactile 1 et le châssis 4 du dispositif de visualisation.

Les actuateurs 31 et 32 sont d'une part fixés au châssis 4 et d'autre part fixés à la pièce plane comprenant la surface tactile 1. Les actuateurs sont fixés par tout moyen de fixation comme de la colle, une résine, des moyens mécaniques etc... L'homme du métier sait adapter le moyen de fixation à une configuration spécifique du dispositif d'interaction. Un actuateur est un système électromécanique qui permet de transformer de l'énergie électrique en énergie mécanique sous la forme le plus souvent d'un mouvement d'une pièce mécanique. Les actuateurs 31 et 32 exercent la fonction de déplacement de la pièce place dans une direction perpendiculaire au plan de la surface tactile 1. Ce déplacement dans une direction perpendiculaire au plan de la surface tactile permet la génération d'ondes sonores 100 par déplacement des molécules d'air autour de la surface tactile et de la cavité du châssis 4. Des ondes sonores se créent au niveau de la face avant (extérieur du châssis 4) de la pièce plane et au niveau de la face arrière de la pièce plane à l'intérieur du châssis. Le pilotage des actuateurs 31 et 32 peut être configuré également pour simuler un retour d'information, par exemple, le changement d'état d'un bouton, de sorte que l'opérateur puisse sentir par le toucher de la surface tactile 1 le passage de non-activé à activé, et confirmer ainsi son interaction. Nous décrirons par la suite par quelle configuration l'ensemble de commande génère l'effet haptique de retour d'information.

On peut citer à titre d'exemple non limitatif plusieurs types d'actuateurs existant sur le marché:
- Masse excentrique rotative (ERM) : Il s'agit d'une masse excentrée qui crée des efforts d'inertie radiaux.
- Masse sismique résonante (LRM) : Une masse suspendue par un ressort est mise en résonance par un dispositif électromagnétique ou électrostatique.
- Electromagnétique : L'actuateur est constitué d'un cadre déformable par le déplacement d'un noyau à l'intérieur d'une bobine.
- Piezo bimorph : Deux types d'actuateurs sont utilisés : lames vibrantes (« Piezo beam ») et disques cloquant (« Piezo disk »). Ces actuateurs utilisent les efforts cisaillant induit par la céramique piezo recouvrant une ou deux faces de l'actuateur. Un exemple d'un tel dispositif est donné dans le brevet US2008122315A1.
- Electrostatique : Par effet capacitif, deux couches parallèles recouvrant l'écran sont attirées ou repoussées entre elles pour stimuler l'objet en interaction.
- A mémoire de forme : Certains matériaux retrouvent une forme particulière lorsqu'ils sont soumis à une certaine température.

Les actuateurs peuvent être au nombre de un à plusieurs actuateurs selon les besoins. Préférentiellement, quatre actuateurs sont positionnés à l'intérieur du châssis.

La surface tactile 1 est montée sur la face avant, la face avant étant définie comme la face présentée à l'observateur et celle présentant les images. De même que pour l'écran, la technologie de surface tactile utilisée ne limite pas la portée de l'invention. La surface tactile 1 peut être une couche tactile capacitive, résistive ou toute autre technologie permettant de détecter la présence d'un actionneur pointant une zone de la surface tactile. La surface tactile 1 est disposée entre l'actionneur et l'écran de façon à détecter la zone pointée par l'actionneur. On entend par actionneur tout objet utilisé pour pointer une zone de l'écran, c'est-à-dire le doigt de l'opérateur ou un stylet par exemple.

La surface tactile 1 est fixée en suspension sur le châssis 4 au moyen des actuateurs. Le plan de la surface tactile 1 couvre la cavité du châssis 4. Les actuateurs peuvent être fixés directement sur la surface tactile ou préférentiellement sur un cadre rigide 2 fixé à la périphérie de la surface tactile. Dans ce dernier cas, la surface tactile 1 et le cadre 2 forment ensemble la pièce plane. Le cadre est configuré pour rigidifier la pièce plane. La surface tactile est utilisée comme membrane et les actuateurs sont montés sur le cadre rigide supportant ladite surface et sont utilisés en temps que transducteur audio et haptique. Un tel dispositif ne nécessite donc pas de suspension, puisque cette fonction est assurée par les actuateurs 31, 32 eux même, qui disposent d'une raideur compatible avec la reproduction des ondes sonores, avec une bande passante allant de 0Hz (Quasi-statique) à plus de 20 Khz.

La surface tactile 1 est généralement rectangulaire adaptée aux écrans de visualisation du marché. Cependant toute forme de surface tactile est possible.

Selon une variante optimisée comme représentée en figure 1, le cadre 2 a une forme définie pour former un évent 5 entre la périphérie du châssis 4 et la périphérie de la pièce plane, la section de l'évent 5 étant dimensionnée pour que, lors du déplacement de la pièce plane 1, 2 par rapport à la cavité, l'onde arrière 101, à la fréquence de résonnance, soit inversée en phase et s'ajoute à l'onde avant 100. Une telle configuration permet d'obtenir un système audio amélioré communément appelé système « Bass Reflex » en anglais. La fonction de cet évent est de provoquer une rotation de phase de l'onde sonore à la résonnance pour obtenir une combinaison avantageuse de l'onde avant et l'onde arrière.

Selon une variante de conception du cadre 2, la bordure extérieure 22 du cadre 2 est courbée perpendiculairement à la bordure intérieure 21 du cadre 2, fixée à la surface tactile 1 et qui s'étend dans le prolongement du plan de la surface tactile 1, de sorte à couvrir la périphérie du châssis 4, l'espace 5 entre la périphérie du châssis et la bordure extérieure 22 formant l'évent. Pour un dispositif de visualisation de grande taille, c'est-à-dire ayant une diagonale supérieure à 10 pouces, un évent peut être avantageusement formé par un volume en périphérie du châssis 4. Le volume de l'évent 5 entourant le châssis est caractérisé par des dimensions suffisamment grandes pour que le dispositif d'interaction se comporte comme un système « Bass Reflex ». Cet évent peut être obtenu par toute forme du cadre 2 tant que celle-ci est configurée de sorte à recouvrir de façon coaxiale une partie ou la totalité de la périphérie du châssis 4. Un cadre ayant une bordure 22 s'étendant à l'intérieur de la cavité du châssis est une variante possible au montage de la figure 1.

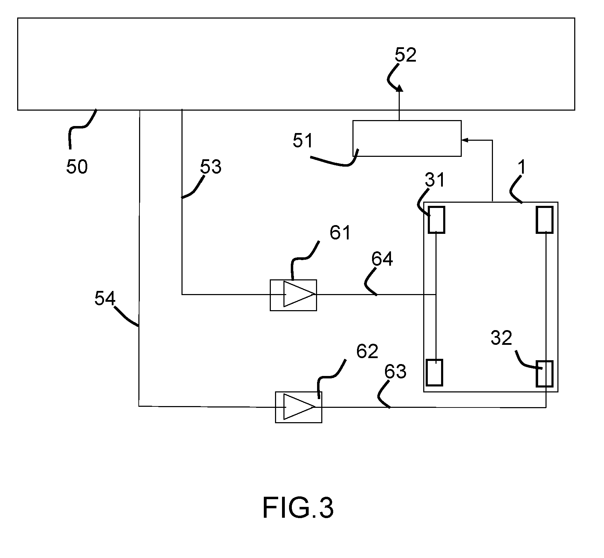

Le dispositif d'interaction comporte les moyens électroniques de commande des actuateurs 31 et 32 et de la fonction tactile. Un calculateur 50 fournit un ou plusieurs signaux audio, deux signaux selon la figure 3 53 et 54 en réponse à un signal de commande tactile 52. Ce signal de commande tactile 52 est généré par un calculateur 51 de position et/ou d'effort mesurés sur la surface tactile 1. Selon les données de position et d'effort du signal de commande 51, le calculateur 50 génère sur des sorties un ou plusieurs signaux audio 53 et 54. Ces signaux audio alimentent les moyens de pilotage 61 et 62 des actuateurs 31 et 32. Le moyen de pilotage 61 est un amplificateur qui modifie le signal audio 53 de sorte à commander les actuateurs 31 par un signal de commande audio 64, les actuateurs étant positionnés sur deux coins de la surface tactile 1. Le moyen de pilotage 62 est un amplificateur qui modifie le signal audio 54 de sorte à commander les actuateurs 32 par un signal de commande audio 63, les actuateurs étant positionnés sur deux coins de la surface tactile 1.

Le calculateur 50 génère un signal audio dont l'intensité ou le timbre son peut être modulé suivant, par exemple, la vitesse de déplacement du doigt, la pression d'enfoncement, ou le fait qu'un ou plusieurs doigts interviennent dans l'interaction avec la surface tactile.

Les moyens électroniques de l'ensemble de commande permettent de mettre en oeuvre un procédé de génération d'un ou plusieurs effets d'interaction. Selon une première variante du procédé générant uniquement un effet sonore, plusieurs étapes successives sont réalisées. Le procédé comporte les étapes suivantes :
Une première étape de génération d'un signal de commande tactile en réponse à l'actionnement de la dite surface tactile,
Une seconde étape de génération d'un signal audio comportant une composante fréquentielle représentant un effet d'interaction sonore,
Une troisième étape de commande des actuateurs selon le signal audio de sorte que l'actionnement de la surface tactile commande le déplacement de la pièce plane par rapport à la cavité du châssis pour générer l'effet d'interaction sonore.

Selon une autre variante du procédé, il est possible de générer un effet sonore et un effet haptique. Selon ce procédé à la seconde étape, on combine au signal audio, représenté en figure 3, un signal comportant une composante fréquentielle représentant un effet d'interaction haptique 201 et à la troisième étape, on commande les actuateurs selon le signal audio de sorte que l'actionnement de la surface tactile commande le déplacement de la pièce plane par rapport à la cavité du châssis pour générer le dit effet sonore et le dit effet haptique simultanément. Selon cette variante, le signal comporte une composante fréquentielle haptique 201 et une composante fréquentielle audio 200.

Selon une autre variante du procédé, il est possible de générer uniquement un effet haptique. Dans ce cas, à la seconde étape le calculateur 50 génère un signal audio comprenant une composante fréquentielle représentant un effet haptique et une composante fréquentielle représentant une onde sonore imperceptible à l'oreille humaine.

Du fait que le calculateur 50 génère un signal audio 53 ou 54 alimentant directement les moyens de pilotage 61 ou 62 des actuateurs 31 ou 32, il est possible de régler le dosage de l'effet haptique, sans avoir recours à une électronique spécifique à l'effet haptique, électronique généralement complexe et coûteuse. Ainsi, l'avantage est la réduction des moyens électroniques pour le pilotage des actuateurs permettant d'obtenir un dispositif d'interaction plus compact et fiable et réalisant des effets audio et sonore en réponse à un actionnement de la dalle tactile. Grâce à l'invention, il est possible de disposer d'une source sonore, en plus des effets haptiques sans recours à des moyens électroniques matériel spécifique audio et haptique comme dans les solutions de l'état de la technique cité. Pour ce faire, il suffit de configurer le processeur 50 au moyen par exemple d'une table de mixage virtuelle (logicielle). Grâce à la table de mixage des signaux audio il est possible de doser par l'interface logicielle le volume principal, les sons, un périphérique extérieur audio. L'intérêt est de ne pas avoir besoin d'applications spécifiques pour bénéficier de la fonction haptique, un fichier numérique audio de format courant dans un système exploitation logiciel peut être utilisé. Un des modes d'activation de l'effet haptique consiste à inclure le spectre de l'effet haptique à un fichier sonore. Un grand nombre d'application dans un système d'exploitation peuvent en effet associer un son à une action, par exemple un clavier virtuel émettant un bip à chaque appui touche. Il suffit donc de remplacer le fichier numérique audio correspondant au bip par un autre fichier numérique audio suivant l'invention pour obtenir un clavier haptique.

En outre, comme représenté en figure 3, les actuateurs gauche et droite pourront être utilisés pour produire un son localisé sur la surface, afin de pouvoir obtenir un effet de spatialisation et localiser le son sur le lieu de l'interaction, et ceci en utilisant deux sorties sons, pouvant être les canaux gauche et droite d'un calculateur audio. Le calculateur 50 peut être un processeur unique ou plusieurs processeurs remplissant des fonctions spécifiques. Par exemple, le calculateur 50 peut être un module électronique dédié à l'audio disposant de deux canaux audio permettant la spatialisation. Selon cette configuration les sorties du module électronique audio sont directement connectées aux moyens de pilotage des actuateurs. Cette configuration de spatialisation permet de renforcer le réalisme audio en fusionnant la source sonore et le lieu d'interaction.

Un des inconvénients des systèmes haptiques existants est que le déplacement de forte amplitude de la surface provoque un son désagréable lié à la résonance de la surface tactile. Selon une variante améliorée de l'invention, le spectre audio généré est corrigé en amplitude aux fréquences de résonance de la dalle et suivant l'effet haptique superposé, de sorte à ne pas perturber l'effet d'interaction haptique. Il est aussi possible, suivant l'invention, d'enregistrer le bruit indésirable produit par l'effet haptique, puis de le rajouter au spectre, en inversant sa phase, de sorte à annuler ce bruit et ne conserver que l'effet haptique.

En outre, l'utilisation du signal audio pour provoquer l'effet sonore ainsi que l'effet haptique permet d'obtenir une synchronisation parfaite de l'effet haptique et l'effet sonore. De plus, l'effet haptique est presque instantané avec l'ordre de commande tactile issu de la surface tactile 1 grâce à la réduction de l'électronique de pilotage des actuateurs pour l'effet haptique. En effet, Il n'y a plus besoin de piloter les actuateurs au moyen d'un circuit de contrôle haptique dédié.

L'invention s'applique aux dispositifs de visualisation comportant une surface tactile et générant des effets haptiques et sonores. L'invention concerne tout type d'appareil de visualisation (téléviseur, borne d'affichage, tablette tactile, ordinateur de bureau, ordinateur portable, téléphone etc... ). L'invention concerne dans son mode de réalisation préféré un dispositif d'affichage générant des effets haptiques et sonores pour un cockpit d'aéronef utilisé comme écran de bord inséré dans l'habitacle ou comme tablette amovible et portative.

## Revendications

1. Dispositif d'interaction (10) comprenant un ensemble structural (1, 2, 31, 4) et un ensemble de commande (50, 51, 61) d'au moins un effet d'interaction, l'ensemble structural comportant un châssis (4) formant une cavité, une pièce plane formée par une surface tactile (1) et au moins un actuateur (31), et l'ensemble de commande comprenant un moyen (51) de génération d'un signal de commande tactile (52) en réponse à l'actionnement de la dite surface tactile (1) et un moyen (61) de pilotage de l'actuateur pour déplacer la pièce plane par rapport à la cavité du châssis (4), **caractérisé :**
- **en ce que** l'ensemble structural est agencé pour que la pièce plane soit maintenue en suspension par l'actuateur (31) de sorte à couvrir la cavité,
- **en ce que** l'ensemble de commande comporte également un moyen de calcul (50), commandé par le signal de commande tactile (52), apte à générer un premier signal audio (53), comportant une composante fréquentielle représentant un effet d'interaction sonore (200), pour commander le moyen (61, 62) de pilotage de l'actuateur,
- et **en ce que** l'ensemble de structure et l'ensemble de commande étant agencés de sorte que l'actionnement de la surface tactile (1) commande le déplacement de la pièce plane (1) par rapport à la cavité du châssis (4) pour générer l'effet d'interaction sonore.

2. Dispositif selon la revendication 1, **caractérisé en ce que** le moyen de calcul (50) est apte à générer un second signal audio, comportant une première composante fréquentielle (201) représentant un effet d'interaction haptique et une seconde composante fréquentielle (200) représentant un effet d'interaction sonore, de sorte que l'actionnement de la surface tactile (1) commande le déplacement de la pièce plane (1) par rapport à la cavité du châssis (4) pour générer le dit effet sonore et le dit effet haptique simultanément.

3. Dispositif selon l'une quelconque des revendications précédentes, **caractérisé en ce qu'**il comporte également un deuxième actuateur (32) associé à un moyen de pilotage (62), le moyen de calcul (50) étant apte à générer un troisième signal audio (54) comportant une composante fréquentielle représentant un effet d'interaction sonore pour commander le moyen de pilotage (62) du deuxième actuateur (32).

4. Dispositif selon la revendication 3, **caractérisé en ce que** le moyen de calcul (50) est apte à générer un quatrième signal audio comportant une première composante fréquentielle représentant un effet d'interaction haptique et une seconde composante fréquentielle représentant un effet d'interaction sonore de sorte que l'actionnement de la surface tactile (1) commande le déplacement de la pièce plane (1) au moyen du deuxième actuateur (32) par rapport à la cavité du châssis pour générer le dit effet sonore et le dit effet haptique simultanément.

5. Dispositif selon l'une quelconque des revendications précédentes, **caractérisé en ce que** la pièce plane (1) comporte également un cadre (2) fixé sur la périphérie de la dite surface tactile (1), le cadre ayant une forme définie pour former un évent (5) entre la périphérie du châssis (4) et la périphérie de la pièce plane (1, 2), la section de l'évent (5) étant dimensionnée pour que, lors du déplacement de la pièce plane (1, 2) par rapport à la cavité, l'onde arrière (101), à la fréquence de résonnance, soit inversée en phase et s'ajoute à l'onde avant (100).

6. Dispositif selon la revendication 5, **caractérisé en ce que** la bordure extérieure (22) du cadre (2) est courbée perpendiculairement à la bordure intérieure (21) du cadre fixée à la surface tactile (1) de sorte à couvrir la périphérie du châssis (4), l'espace entre la périphérie du châssis (4) et la bordure extérieure (22) formant l'évent (5).

7. Dispositif selon l'une quelconque des revendications précédentes, **caractérisé en ce que** les actuateurs sont configurés pour déplacer la pièce plane perpendiculairement au plan de la surface tactile (1).

8. Procédé de génération d'au moins un effet d'interaction pour un dispositif interactif selon la revendication 1, **caractérisé en ce qu'**il comporte les étapes successives suivantes :
- Une première étape de génération d'un signal de commande tactile en réponse à l'actionnement de la dite surface tactile,
- Une seconde étape de génération d'un signal audio comportant une composante fréquentielle représentant un effet d'interaction sonore,
- Une troisième étape de commande des actuateurs selon le signal audio de sorte que l'actionnement de la surface tactile commande le déplacement de la pièce plane par rapport à la cavité du châssis pour générer l'effet d'interaction sonore.

9. Procédé selon la revendication 8, **caractérisé en ce qu'**à la seconde étape, on combine au signal audio un signal comportant une composante fréquentielle représentant un effet d'interaction haptique et **en ce qu'**à la troisième étape, on commande les actuateurs selon le signal audio de sorte que l'actionnement de la surface tactile commande le déplacement de la pièce plane par rapport à la cavité du châssis pour générer le dit effet sonore et le dit effet haptique simultanément.

10. Procédé selon l'une quelconque des revendications 8 ou 9, le dispositif d'interaction comportant également un moyen d'affichage, **caractérisé en ce qu'**il comporte une étape de génération d'un effet d'interaction visuel sur le moyen d'affichage.
